# EUROPEAN PATENT SPECIFICATION

(11) **EP 4 152 818 B1**
(45) Date of publication and mention of the grant of the patent: **01.07.2026**
(21) Application number: 20936060.1
(22) Date of filing: 11.05.2020
(51) Int. Cl.: H04W 36/08, H04W 76/27, H04W 88/06, H04W 92/20

(54) **BASE STATION SWITCHING METHOD AND APPARATUS, COMMUNICATION DEVICE, AND STORAGE MEDIUM**
BASISSTATIONSUMSCHALTVERFAHREN UND -VORRICHTUNG, KOMMUNIKATIONSVORRICHTUNG UND SPEICHERMEDIUM
PROCÉDÉ ET APPAREIL DE COMMUTATION DE STATION DE BASE, DISPOSITIF DE COMMUNICATION ET SUPPORT DE STOCKAGE

(43) Date of publication of application: 22.03.2023
(73) Proprietor: Beijing Xiaomi Mobile Software Co., Ltd., Beijing 100085 (CN)
(72) Inventor: HONG, Wei, Beijing 100085 (CN)
(74) Representative: dompatent
(86) International application number: PCT/CN2020/089672
(87) International publication number: WO 2021/226803

(56) References cited:
- EP-A2- 2 712 235
- WO-A1-2018/141148
- WO-A1-2020/065622
- WO-A1-2020/069144
- CN-A- 107 567 716
- CN-A- 108 632 815
- CN-A- 110 546 993
- CN-A- 111 132 378
- US-A1- 2014 295 831
- US-A1- 2022 248 276
- VIVO (MODERATOR): "Report of phase 1 Multi-SIM email discussion", vol. TSG RAN, no. Newport Beach, USA; 20190916 - 20190920, 9 September 2019 (2019-09-09), pages 1 - 36, XP051782444, Retrieved from the Internet <URL:http://www.3gpp.org/ftp/tsg_ran/TSG_RAN/TSGR_85/Docs/RP-191898.zip> [retrieved on 20190909]

## Description

### TECHNICAL FIELD

The invention relates to, but is not limited to, the field of wireless communication technologies and in particular, to a method and an apparatus for base station switching, a communication device and a storage medium.

### BACKGROUND

In the fifth generation (5G) new radio (NR), a new radio resource control (RRC) state is introduced, that is, a RRC INACTIVE state. In the RRC INACTIVE state, a non access stratum (NAS) of a terminal remains in a connected state, that is, a connection between the terminal and a core network is still maintained, and a NR connection of the terminal is disconnected; the base station side retains context information of the terminal and a connection between the terminal and the next generation (NG) of the core network. The terminal may move within an area configured by the base station without notifying the network, to save signaling overhead.

When the terminal enters the inactive state, the last serving base station stores the context information of the terminal and NG connection between the terminal and the service core network. The access stratum (AS) of the terminal also stores the corresponding context information, including: a bearer, an identifier of the inactive state, a home area, etc. The base station may page to the terminal in the inactive state through a wireless access network paging mechanism within the configured area. The terminal may resume data transmission based on the context information stored on the terminal side and the base station side.

CN110546993A discloses a method for cell reselection applied to a mobile terminal provided with at least two SIM cards. WO2018141148A1 discloses improved methods, systems, devices, or apparatuses that support network assisted multi-subscription physical layer sharing.

### SUMMARY

In view of the above, embodiments of the invention provide methods for base station switching, and a communication device.

According to a first aspect of the invention, a method for base station switching is performed by a terminal, as defined in independent claim 1.

In an embodiment, the method further includes: residing the second SIM on the second base station in response to receiving the residence indication.

In an embodiment, residing the second SIM on the second base station in response to receiving the residence indication includes: residing the second SIM on the second base station in response to the first SIM forwarding the received residence indication to the second SIM.

In an embodiment, receiving the residence indication sent by the second base station in response to the information of the second SIM includes at least one of: receiving a radio resource control (RRC) signaling carrying the residence indication sent by the second base station; receiving a medium access control control element (MAC CE) signaling carrying the residence indication sent by the second base station; receiving a physical downlink control channel (PDCCH) signaling carrying the residence indication sent by the second base station.

In an embodiment, the residence indication includes an indication that a communication path of the second SIM is successfully switched from a base station where the second SIM currently resides to the second base station.

In an embodiment, the base station where the second SIM currently resides includes: the first base station.

In an embodiment, sending the information of the second SIM to the second base station includes: sending, by the first SIM, a RRC reconfiguration complete signaling carrying the information of the second SIM to the second base station.

In an embodiment, the information of the second SIM includes: identification information and state information of the second SIM.

According to a second aspect of the invention, a method for base station switching is performed by a second base station, as defined in independent claim 7.

In an embodiment, determining, based on the information of the second SIM, the second SIM in the inactive state is switched from a base station where the second SIM currently resides to the second base station includes at least one of: obtaining, based on the information of the second SIM, context information of the second SIM from the base station where the second SIM currently resides; requesting a core network to switch a communication path of the second SIM to the second base station; and in response to successfully obtaining the context information of the second SIM and determining that the core network switches the communication path of the second SIM to the second base station, switching a resident base station of the second SIM in the inactive state from the base station where the second SIM currently resides to the second base station.

In an embodiment, obtaining, based on the information of the second SIM, the context information of the second SIM from the base station where the second SIM currently resides includes: sending, based on the information of the second SIM, a context information request to the base station where the second SIM currently resides, in which the context information request is configured to request the context information of the second SIM; and receiving the context information of the second SIM sent by the base station where the second SIM currently resides in response to the context information request.

In an embodiment, requesting the core network to switch the communication path of the second SIM to the second base station includes: sending, based on the received context information sent by the base station where the second SIM currently resides, a path handover request to the core network, in which the path handover request is configured to request the core network to switch the communication path between the core network and the second SIM from the base station where the second SIM currently resides to the second base station; determining that the core network switches the communication path of the second SIM to the second base station includes: receiving a path handover success indication sent by the core network in response to the path handover request; and determining, based on the path handover success indication, the communication path of the second SIM is successfully switched from the base station where the second SIM currently resides to the second base station.

In an embodiment, the residence indication includes: an indication that the communication path of the second SIM is successfully switched from the base station where the second SIM currently resides to the second base station.

In an embodiment, sending the residence indication to the first SIM includes: sending a radio resource control (RRC) signaling carrying the residence indication to the first SIM; sending a medium access control control element (MAC CE) signaling carrying the residence indication to the first SIM; sending a physical downlink control channel (PDCCH) signaling carrying the residence indication to the first SIM.

In an embodiment, receiving the information of the second SIM sent by the terminal includes: receiving a RRC reconfiguration complete signaling carrying the information of the second SIM that is sent by the first SIM to the second base station.

In an embodiment, the information of the second SIM includes: identification information and state information of the second SIM.

In an embodiment, the base station where the second SIM currently resides includes: the first base station.

According to a third aspect of the invention, a communication device is provided, including a processor, a transceiver, a memory, and an executable program stored on the memory and capable of being run by the processor. When the executable program is run by the processor, steps in the method for base station switching are implemented according to the first aspect, or the second aspect.

In the invention, in response to the terminal switching the first SIM from the first base station to the second base station, the terminal sends the information of the second SIM to the second base station, in which the information of the second SIM is configured to reside the second SIM in the inactive state on the second base station, and the first SIM is in the connected state. In this way, when the first SIM is switched from the first base station to the second base station, the resident base station of the second SIM is switched from the first base station to the second base station, so as to reduce the situations that RRC connection of the second SIM with the first base station fails to resume or the base station where the second SIM currently resides fails to page to the second SIM, which are caused by the change of the base station signal or the terminal movement, and to improve the communication success rate.

It should be understood that, the above general description and the following detailed description are exemplary and explanatory, which cannot limit the embodiments of the invention.

### BRIEF DESCRIPTION OF THE DRAWINGS

The accompanying drawings, which are incorporated in and constitute a part of this specification, illustrate embodiments consistent with the invention and together with the description serve to explain the principles of the embodiments of the invention.
FIG. 1 illustrates a structural schematic diagram of a wireless communication system according to an embodiment.
FIG. 2 illustrates a schematic flowchart of a method for base station switching according to an embodiment.
FIG. 3 illustrates a schematic flowchart of a method for base station switching according to the invention.
FIG. 4 illustrates a schematic flowchart of a method for base station switching according to the invention.
FIG. 5 illustrates a schematic flowchart of yet another method for base station switching according to an embodiment.
FIG. 6 illustrates a block diagram of an apparatus for base station switching according to an embodiment.
FIG. 7 illustrates a block diagram of another apparatus for base station switching according to an embodiment.
FIG. 8 illustrates a block diagram of yet another apparatus for base station switching according to an embodiment.
FIG. 9 illustrates a block diagram of a device for base station switching according to an embodiment.

### DETAILED DESCRIPTION

The embodiments may be described in detail herein, examples of which are illustrated in the accompanying drawings. The same numerals in different drawings refer to the same or similar elements unless otherwise indicated, when the following description refers to the drawings. The implementations described in the following embodiments do not represent all implementations consistent with the embodiments of the invention. Rather, they are merely examples of apparatus and methods consistent with some aspects of embodiments of the invention as recited in the appended claims.

The terms used in the embodiments of the invention are only for the purpose of describing particular embodiments, and are not intended to limit the embodiments of the invention. As used in the embodiments of the invention and the appended claims, the singular forms "a", "an," and "the" are intended to include the plural forms as well, unless the context clearly dictates otherwise. It may also be understood that the term "and/or" as used herein refers to and includes any and all possible combinations of one or more of the associated listed items.

It should be understood that although the terms first, second, third, etc. may be used in embodiments of the invention to describe various pieces of information, such information should not be limited to these terms. These terms are only used to distinguish the same category of information from each other. For example, without departing from the scope of the embodiments of the invention, the first information may also be referred to as the second information, and similarly, the second information may also be referred to as the first information. Depending on the context, the words "if" and "in case" as used herein may be interpreted as "at the time of..." or "when..." or "in response to determining...".

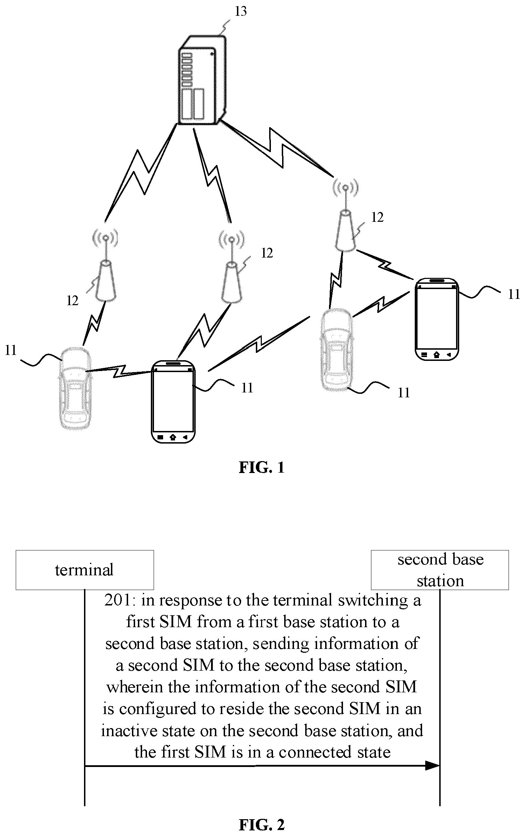

FIG. 1 is a structural schematic diagram of a wireless communication system according to an embodiment of the invention. As shown in FIG. 1, the wireless communication system is a communication system based on cellular mobile communication technology, and the wireless communication system may include: several terminals 11 and several base stations 12.

The terminal 11 may be a device that provides voice and/or data connectivity to a user. The terminal 11 may communicate with one or more core networks via a Radio Access Network (RAN). The terminal 11 may be an Internet of Things (IoT) terminal, such as a sensor device, a mobile phone (or a "cellular" phone) and a computer with the IoT terminal. The terminal 11 may be a fixed, portable, pocket, hand-held, built-in computer or a vehicle-mounted device, for example, a Station (STA), a subscriber unit, a subscriber station, a mobile station, a mobile, a remote station, an access point, a remote terminal, an access terminal, a user terminal, a user agent, a user device, or a UE. Alternatively, the terminal 11 may also be a device of an unmanned aerial vehicle. Alternatively, the terminal 11 may also be a vehicle-mounted device, for example, an Engine Control Unit (ECU) with a wireless communication function, or a wireless UE externally connected to the ECU. Alternatively, the terminal 11 may also be a roadside device, for example, a streetlight, a signal light, or other roadside devices with a wireless communication function.

The base station 12 may be a network-side device in the wireless communication system. The wireless communication system may be the 4th generation mobile communication (4G) system, also known as a Long Term Evolution (LTE) system. Alternatively, the wireless communication system may also be the 5th generation mobile communication (5G) system, also known as a New Radio (NR) system or 5G NR system. Alternatively, the wireless communication system may also be a next-generation system of the 5G system. The access network in the 5G system may be called New Generation-Radio Access Network (NG-RAN). Alternatively, the wireless communication system may be a machine-type communication (MTC) system.

The base station 12 may be an evolved base station (eNB) employed in the 4G system. Alternatively, the base station 12 may also be a generation base station (gNB) that adopts a centralized distributed architecture in the 5G system. When the base station 12 adopts the centralized distributed architecture, it usually includes a central unit (CU) and at least two distributed units (DUs). The CU is provided with protocol stacks of a packet data convergence protocol (PDCP) layer, a radio link control (RLC) layer, and a media access control (MAC) layer. A physical (PHY) layer protocol stack is set in the DU. The specific implementation form of the base station 12 is not limited in this embodiment of the invention.

A wireless connection may be established between the base station 12 and the terminal 11 through a radio air interface. In different embodiments, the radio air interface is a radio air interface based on the 4G standard. Alternatively, the radio air interface is a radio air interface based on the 5G standard, for example, the radio air interface is the NR. Alternatively, the radio air interface may also be a radio air interface based on a next generation of the 5G standard.

In some embodiments, an End to End (E2E) connection may also be established between the terminals 11, for example, scenes of vehicle to vehicle (V2V) communication, vehicle to infrastructure (V2I) communication and vehicle to pedestrian (V2P) communication in vehicle to everything (V2X) communication.

In some embodiments, the above wireless communication system may further include a network management device 13.

A plurality of base stations 12 are connected to the network management device 13 respectively. The network management device 13 may be a core network device in the wireless communication system, for example, the network management device 130may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS). The implementation form of the network management device 13 is not limited in this embodiment of the invention.

The execution subjects involved in the embodiments of the invention include, but are not limited to: a terminal supporting a subscriber identity module (SIM), a base station, and the like.

The application scenario for the embodiments of the invention is that, with the development of wireless communication technologies, there are more and more SIM terminals on the market. At present, the processing methods for multi-card terminals are mainly based on the implementation of various terminal manufacturers, and there is no unified standard for regulations, which leads to many different terminal behaviors and processing methods, such as, dual-SIM single-standby, dual-SIM dual-standby single-communication, dual-SIM dual-standby dual-communication, etc. For multi-SIM terminals, the current network considers different SIMs as different terminals, and each SIM communicates with the network independently, without any cooperation with each other.

As shown in FIG. 2, a method for switching base station is provided in this embodiment, which is applied to a wireless communication device such as a terminal in a mobile communication network. The method includes the following step at 201.

At 201, in response to the terminal switching a first SIM from a first base station to a second base station, information of a second SIM is sent to the second base station, in which the information of the second SIM is configured to reside the second SIM in an inactive state on the second base station, and the first SIM is in a connected state.

Here, the terminal may be a multi-SIM terminal, and a behavior mode of the terminal may be dual-card dual-standby single-communication, dual-card dual-standby dual-communication, and the like. The mobile communication network may include a 4G mobile communication network or a 5G mobile communication network and the like. The first SIM and the second SIM are SIMs that belong to the same multi-SIM terminal, but are different SIMs.

The SIM may be a SIM card existing in a separate form or existing in an embedded subscriber identification module (e-SIM) of the terminal in an integrated form.

The first SIM may be in a connected state. The first base station may be a base station where the first SIM currently resides. The second SIM in the inactive state may also be the SIM residing on the first base station. The second SIM may also reside in other base station.

The base station where the second SIM in the inactive state resides is called an anchor base station. Paging information sent by a core network to the second SIM is forwarded to the second SIM through the anchor base station. When the second SIM switches from the inactive state to the connected state, a resume request may be sent to the anchor base station.

In response to the terminal switching the first SIM from the first base station to the second base station may include: in response to a process of switching by the terminal the first SIM from the first base station to the second base station, or in response that the terminal switched the first SIM from the first base station to the second base station.

The first SIM is in a connected state and resides in the first base station, and performs measurement according to configuration of the first base station during the movement process. When a measurement report condition set by the first base station is satisfied, the first SIM performs measurement reporting to the first base station. For example, the second base station that meets a handover condition is measured. When the first base station decides to perform handover for the first SIM, the first base station sends a HANDOVER REQUEST signaling to the second base station through an Xn interface or a X2 interface. If the second base station accepts the HANDOVER REQUEST from the first base station, the second base station may send a HANDOVER REQUEST ACKNOWLEDGE signaling to the first base station through the Xn interface or the X2 interface. After receiving the HANDOVER REQUEST ACKNOWLEDGE signaling sent by the second base station through the Xn interface, the first base station sends a RRC reconfiguration signaling to the first SIM. After receiving the RRC reconfiguration signaling sent by the first base station, the first SIM establishes an RRC connection with the second base station according to configuration in the signaling. Then, the first SIM completes the handover from the first base station to the second base station.

When the first SIM is switched from the first base station to the second base station, it can be considered that the second base station has better signal quality, or the terminal tends to move from the first base station to the second base station. As the terminal continues to move, it may occur that the terminal leaves a signal coverage of the first base station. If the second SIM still resides on the currently residing base station, the probability that the RRC connection with the first base station cannot be resumed may increase.

Therefore, when the first SIM is switched from the first base station to the second base station, the terminal may send the information of the second SIM to the second base station, so as to request to reside the second SIM on the second base station. The second SIM in the inactive state may change its resident base station according to the change of the base station signal or the movement of the terminal. The information of the second SIM may be used to characterize the second SIM. For example, the information of the second SIM may be an international mobile subscriber identity (IMSI) of the second SIM and the like. The second base station may determine the second SIM through the information of the second SIM.

Switching the base station where the second SIM currently resides to the second base station refers to determining the second base station as an anchor base station of the second SIM, so that the second SIM may initiate an RRC reconnection to the second base station or receive a paging from the second base station when the second SIM switches from the inactive state.

In this way, when the first SIM is switched from the first base station to the second base station, the resident base station of the second SIM is switched from the base station where the second SIM currently resides to the second base station, so as to reduce the situations that RRC connection of the second SIM with the currently residing base station fails to resume or the base station where the second SIM currently resides fails to page to the second SIM, which are caused by the change of the base station signal or the terminal movement, and to improve the communication success rate.

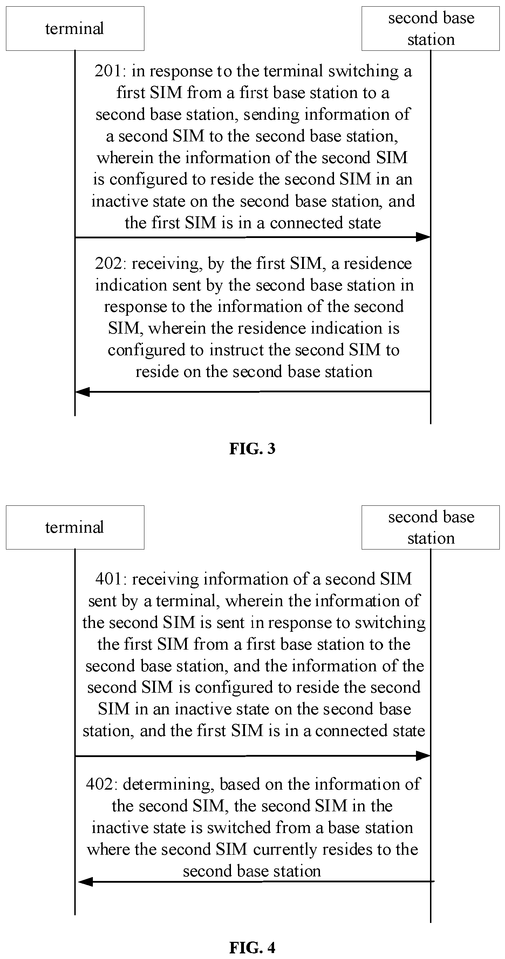

According to the invention, as shown in FIG. 3, the method further includes the following step at 202.

At 202, a residence indication sent by the second base station in response to the information of the second SIM is received by the first SIM, in which the residence indication is configured to instruct the second SIM to reside on the second base station.

Taking the second base station as the anchor base station of the second SIM, the second base station needs to have context information of the second SIM, and to have communication connection between the core network and the second SIM. Here, in the 5G mobile communication network, the communication connection between the core network and the second SIM includes, at the network side: a next generation (NG) connection between the core network and the base station where the second SIM resides. The second base station where the second SIM resides needs to establish an NG connection with the core network for communication transmission of the second SIM.

After receiving the information of the second SIM, the second base station can obtain, based on identification information of the second SIM, the context information of the second SIM from the base station where the second SIM currently resides and request the core network to switch the communication connection of the second SIM from the base station where the second SIM currently resides to the second base station.

When the second base station obtains the context information of the second SIM, and the communication connection of the second SIM is switched from the base station where the second SIM currently resides to the second base station, the second base station may send a residence indication to the first SIM, indicating that the second SIM is resided on the second base station, so as to meet the needs of residing the second SIM on the base station side.

Exemplarily, the base station where the second SIM currently resides may be the first base station. After receiving the information of the second SIM, the second base station may obtain, based on the identification information of the second SIM, the context information of the second SIM from the first base station and request the core network to switch the communication connection of the second SIM from the first base station to the second base station.

In an embodiment, the information of the second SIM includes: identification information and state information of the second SIM.

Here, the information of the second SIM may be sent by the first SIM that has established a connection with the second base station. The information of the second SIM may include: identification information that can identify the second SIM, such as, IMSI, radio network temporary identity (RNTI), and inactive radio network temporary identity (I-RNTI), etc.

The information of the second SIM may further include: state information where the second SIM is located, that is, indication information indicating that the second SIM is in an inactive state. The information of the second SIM may further include: information of the base station where the second SIM currently resides, and the like.

After the second base station determines the identification information of the second SIM and determines the inactive state of the second SIM, the second SIM may reside on the second base station.

After obtaining the identification information and the state information of the second SIM, the second base station requests, through an interface between base stations, such as the Xn interface/X2 interface in 5G mobile communication, context information of the second SIM stored by the base station where the second SIM currently resides, from the base station where the second SIM currently resides. The second base station may request the base station where the second SIM currently resides to send the context information of the second SIM stored by the base station where the second SIM currently resides in the form of a context information request.

Exemplarily, the second base station may request the context information of the second SIM by sending a RETRIEVE UE CONTEXT REQUEST signaling.

After receiving the context information request sent by the second base station, the base station where the second SIM currently resides may send the context information requested by the second base station to the second base station through an interface between base stations, such as the Xn interface/X2 interface in 5G mobile communication.

Exemplarily, the second base station may be replied by a RETRIEVE UE CONTEXT RESPONSE signaling, which carries the context information of the second SIM.

The received context information of the second SIM sent by the base station where the second SIM currently resides has a logical connection relationship of the second SIM. A communication path for communication transmission of the second SIM between the access and mobility management function (AMF) of the core network and the base station where the second SIM currently resides may be determined according to the logical connection relationship.

The second base station may send a path handover request to the core network that switches the communication path of the second SIM between the core network and the base station where the second SIM currently resides to the second base station.

In some embodiments, the path handover request may include at least: indication information of a target path after handover.

In other embodiments, the path handover request may include an indication of the original path and an indication of the target path. The original path refers to a communication path between the core network and the base station where the second SIM currently resides for communication transmission of the second SIM, and the target path refers to a communication path between the core network and the second base station for communication transmission of the second SIM.

After receiving the path handover request, the core network switches the communication path of the second SIM. In response to the success of path handover, a path handover success indication is sent to the second base station. When the second base station receives the path handover success indication, it can be determined that the communication path of the second SIM has been switched to the second base station.

In an embodiment, the method further includes: in response to receiving the residence indication, residing the second SIM on the second base station.

The second base station receives the path handover success indication, and determines the context information of the second SIM is obtained. Then, the second base station sends the residence indication to the first SIM, indicating that the second SIM is resided on the second base station.

After receiving the residence indication, the terminal may determine that the second base station has met the requirements for residing the second SIM, that is, the second base station has the context information of the second SIM, and the communication connection of the second SIM is switched from the base station where the second SIM currently resides to the second base station.

The terminal may enable the second SIM to reside on the second base station, so that the second SIM may initiate an RRC reconnection to the second base station or receive a paging from the second base station when the second SIM switches from the inactive state.

In an embodiment, residing the second SIM on the second base station in response to receiving the residence indication includes: residing the second SIM on the second base station in response to the first SIM forwarding the received residence indication to the second SIM.

Here, since the first SIM is in the connected state, the second SIM may be kept in the inactive state without waking up the second SIM when the first SIM receives the residence indication, thus saving power consumption of the second SIM.

After receiving the residence indication forwarded by the first SIM, the second SIM may be resided on the second base station. Here, the identification information of the second base station may be set by the second base station in the residence indication. The second SIM may determine the resident base station according to the identification information of the second base station. Alternatively, the terminal may also determine a base station that sends the residence indication, and reside the second SIM on the base station that sends the residence indication.

In an embodiment, receiving the residence indication sent by the second base station in response to the information of the second SIM includes at least one of: receiving a RRC signaling carrying the residence indication sent by the second base station; receiving a MAC control element (CE) signaling carrying the residence indication sent by the second base station; receiving a PDCCH signaling carrying the residence indication sent by the second base station.

The residence indication may be carried in the RRC signaling, MAC CE signaling, or PDCCH signaling and sent to the first SIM.

The residence indication may be carried in reserved bits of existing the RRC signaling, MAC CE signaling, or PDCCH signaling. In this way, information amount of the signaling may be increased, and a utilization rate of the signaling may be improved. Alternatively, a specific RRC signaling, MAC CE signaling, or PDCCH signaling may also be added to carry the residence indication.

In an embodiment, the residence indication includes: an indication that the communication path of the second SIM is successfully switched from the base station where the second SIM currently resides to the second base station.

Here, the residence indication sent by the second base station may indicate that the communication path of the second SIM is successfully switched from the base station where the second SIM currently resides to the second base station. After obtaining the indication, the terminal may determine that the communication path of the second SIM has been switched to the second base station. Therefore, the terminal may enable the second SIM to reside on the second base station.

In an embodiment, the base station where the second SIM currently resides includes: the first base station.

The first SIM and the second SIM may reside on the first base station at the same time. In response to a handover of the first SIM from the first base station to the second base station, the terminal enables the second SIM to reside on the second base station.

Since the handover of the first SIM from the first base station to the second base station may perform signal measurement of the first base station, when the first SIM switches from the first base station to the second base station, it may be determined that the second base station has better communication environment such as signal quality. In this way, residing the second SIM on the second base station may enable the second SIM to obtain better signal quality and improve a success rate of the second SIM switching from the inactive state to the connected state.

In an embodiment, sending the information of the second SIM to the second base station includes: sending, by the first SIM, a RRC reconfiguration complete signaling carrying the information of the second SIM to the second base station.

The first SIM may carry the information of the second SIM in the RRC reconfiguration complete (RRCReconfigurationComplete) signaling to notify the second base station to be resided by the second SIM, during the handover from the base station where the second SIM currently resides to the second base station.

The RRC reconfiguration complete signaling is configured to carry the information of the second SIM. On the one hand, by sending the RRC reconfiguration complete signaling, it may be determined that the first SIM has been switched to the second base station. For the situation where the first SIM is successfully switched, it may be ensured to switch at first time the resident base station of the second SIM. It may be ensured that the first SIM and the second SIM reside on the same base station. The communication quality of the second SIM is guaranteed. On the other hand, the information amount of the RRC reconfigured signaling may be increased, and the signaling utilization rate may be improved.

As shown in FIG. 4, a method for base station switching according to the invention is provided, which is applied to a second base station in a mobile communication network. The method includes the following steps at 401-402.

At 401, information of a second SIM sent by a terminal is received, in which the information of the second SIM is sent in response to switching the first SIM from a first base station to the second base station, and the information of the second SIM is configured to reside the second SIM in an inactive state on the second base station, and the first SIM is in a connected state.

At 402: Based on the information of the second SIM, it is determined the second SIM in the inactive state is switched from a base station where the second SIM currently resides to the second base station.

Here, the terminal may be a multi-SIM terminal, and a behavior mode of the terminal may be dual-card dual-standby single-communication, dual-card dual-standby dual-communication, and the like. The mobile communication network may include a 4G mobile communication network or a 5G mobile communication network and the like. The first SIM and the second SIM are SIMs that belong to the same multi-SIM terminal, but are different SIMs.

The SIM may be a SIM card existing in a separate form or existing in an embedded subscriber identification module (e-SIM) of the terminal in an integrated form.

The first SIM may be in a connected state. The first base station may be a base station where the first SIM currently resides. The second SIM in the inactive state may also be the SIM residing on the first base station. The second SIM may also reside on other base stations.

The base station where the second SIM in the inactive state resides is called an anchor base station. Paging information sent by a core network to the second SIM is forwarded to the second SIM through the anchor base station. When the second SIM switches from the inactive state to the connected state, a resume request may be sent to the anchor base station.

In response to the terminal switching the first SIM from the first base station to the second base station, it may include: in response to the terminal switching the first SIM from the first base station to the second base station, or, the terminal switching the first SIM from the first base station to the second base station. The base station switches to the second base station.

The first SIM is in a connected state and resides in the first base station, and performs measurement according to configuration of the first base station during the movement process. When a measurement report condition set by the first base station is satisfied, the first SIM performs measurement reporting to the first base station. For example, the second base station that meets a handover condition is measured. When the first base station decides to perform handover for the first SIM, the first base station sends a HANDOVER REQUEST signaling to the second base station through an Xn interface or a X2 interface. If the second base station accepts the HANDOVER REQUEST from the first base station, the second base station may send a HANDOVER REQUEST ACKNOWLEDGE signaling to the first base station through the Xn interface or the X2 interface. After receiving the HANDOVER REQUEST ACKNOWLEDGE signaling sent by the second base station through the Xn interface, the first base station sends a RRC reconfiguration signaling to the first SIM. After receiving the RRC reconfiguration signaling sent by the first base station, the first SIM establishes an RRC connection with the second base station according to configuration in the signaling. Then, the first SIM completes the handover from the first base station to the second base station.

When the first SIM is switched from the first base station to the second base station, it can be considered that the second base station has better signal quality, or the terminal tends to move from the first base station to the second base station. As the terminal continues to move, it may occur that the terminal leaves a signal coverage of the first base station. If the second SIM still resides in the currently residing base station, the probability that the RRC connection with the first base station cannot be restored may increase.

Therefore, when the first SIM is switched from the first base station to the second base station, the terminal may send the information of the second SIM to the second base station, so as to request to reside the second SIM on the second base station. The second SIM in the inactive state may change its resident base station according to the change of the base station signal or the movement of the terminal. The information of the second SIM may be used to characterize the second SIM. For example, the information of the second SIM may be an international mobile subscriber identity (IMSI) of the second SIM and the like. The second base station may determine the second SIM through the information of the second SIM.

Switching the base station where the second SIM currently resides to the second base station refers to determining the second base station as an anchor base station of the second SIM, so that the second SIM may initiate an RRC reconnection to the second base station or receive a paging from the second base station when the second SIM switches from the inactive state.

In this way, when the first SIM is switched from the first base station to the second base station, the resident base station of the second SIM is switched from the base station where the second SIM currently resides to the second base station, so as to reduce the situations that RRC connection of the second SIM with the base station the situations that RRC connection of the second SIM with the currently residing base station fails to resume fails to resume or the base station where the second SIM currently resides fails to page to the second SIM, which are caused by the change of the base station signal or the terminal movement, and to improve the communication success rate.

In an embodiment, determining, based on the information of the second SIM, the second SIM in the inactive state is switched from the base station where the second SIM currently resides to the second base station, including at least one of the following:
obtaining, based on the information of the second SIM, context information of the second SIM from the base station where the second SIM currently resides;
requesting a core network to switch a communication path of the second SIM to the second base station; and
in response to successfully obtaining the context information of the second SIM and determining that the core network switches the communication path of the second SIM to the second base station, switching a resident base station of the second SIM in the inactive state from the base station where the second SIM currently resides to the second base station.

Taking the second base station as the anchor base station of the second SIM, the second base station needs to have context information of the second SIM, and to have communication connection between the core network and the second SIM. Here, in the 5G mobile communication network, the communication connection between the core network and the second SIM includes, at the network side: a next generation (NG) connection between the core network and the base station where the second SIM resides. The second base station where the second SIM resides needs to establish an NG connection with the core network for communication transmission of the second SIM.

After receiving the information of the second SIM, the second base station can obtain, based on identification information of the second SIM, the context information of the second SIM from the base station where the second SIM currently resides and request the core network to switch the communication connection of the second SIM from the base station where the second SIM currently resides to the second base station.

When the second base station obtains the context information of the second SIM, and the communication connection of the second SIM is switched from the base station where the second SIM currently resides to the second base station, the second base station may send a residence indication to the first SIM, indicating that the second SIM is resided on the second base station, so as to meet the needs of residing the second SIM on the base station side.

Exemplarily, the base station where the second SIM currently resides may be the first base station. After receiving the information of the second SIM, the second base station may obtain, based on the identification information of the second SIM, the context information of the second SIM from the first base station and request the core network to switch the communication connection of the second SIM from the first base station to the second base station.

In an embodiment, the information of the second SIM includes: identification information and state information of the second SIM.

Here, the information of the second SIM may be sent by the first SIM that has established a connection with the second base station. The information of the second SIM may include: identification information that can identify the second SIM, such as, IMSI, radio network temporary identity (RNTI), and inactive radio network temporary identity (I-RNTI), etc.

The information of the second SIM may further include: state information where the second SIM is located, that is, indication information indicating that the second SIM is in an inactive state. The information of the second SIM may further include: information of the base station where the second SIM currently resides, and the like.

After the second base station determines the identification information of the second SIM and determines the inactive state of the second SIM, the second SIM may reside on the second base station.

In an embodiment, obtaining, based on the information of the second SIM, the context information of the second SIM from the base station where the second SIM currently resides includes: sending, based on the information of the second SIM, a context information request to the base station where the second SIM currently resides, in which the context information request is configured to request the context information of the second SIM; and receiving the context information of the second SIM sent by the base station where the second SIM currently resides in response to the context information request.

After obtaining the identification information and the state information of the second SIM, the second base station requests, through an interface between base stations, such as the Xn interface/X2 interface in 5G mobile communication, context information of the second SIM stored by the base station where the second SIM currently resides, from the base station where the second SIM currently resides. The second base station may request the base station where the second SIM currently resides to send the context information of the second SIM stored by the base station where the second SIM currently resides in the form of a context information request.

Exemplarily, the second base station may request the context information of the second SIM by sending a RETRIEVE UE CONTEXT REQUEST signaling.

After receiving the context information request sent by the second base station, the base station where the second SIM currently resides may send the context information requested by the second base station to the second base station through an interface between base stations, such as the Xn interface/X2 interface in 5G mobile communication.

Exemplarily, the second base station may be replied by a RETRIEVE UE CONTEXT RESPONSE signaling, which carries the context information of the second SIM.

In an embodiment, requesting the core network to switch the communication path of the second SIM to the second base station includes: sending, based on the received context information sent by the base station where the second SIM currently resides, a path handover request to the core network, in which the path handover request is configured to request the core network to switch the communication path between the core network and the second SIM from the base station where the second SIM currently resides to the second base station. Determining that the core network switches the communication path of the second SIM to the second base station includes: receiving a path handover success indication sent by the core network in response to the path handover request; and determining, based on the path handover success indication, the communication path of the second SIM is successfully switched from the base station where the second SIM currently resides to the second base station.

The received context information of the second SIM sent by the base station where the second SIM currently resides has a logical connection relationship of the second SIM. A communication path for communication transmission of the second SIM between the access and mobility management function (AMF) of the core network and the base station where the second SIM currently resides may be determined according to the logical connection relationship.

The second base station may send a path handover request to the core network that switches the communication path of the second SIM between the core network and the base station where the second SIM currently resides to the second base station.

In some embodiments, the path handover request may include at least: indication information of a target path after handover.

In other embodiments, the path handover request may include an indication of the original path and an indication of the target path. The original path refers to a communication path between the core network and the base station where the second SIM currently resides for communication transmission of the second SIM, and the target path refers to a communication path between the core network and the second base station for communication transmission of the second SIM.

After receiving the path handover request, the core network switches the communication path of the second SIM. In response to the success of path handover, a path handover success indication is sent to the second base station. When the second base station receives the path handover success indication, it can be determined that the communication path of the second SIM has been switched to the second base station.

In an embodiment, the method further includes: sending a residence indication to the first SIM, in which the residence indication is configured to instruct the second SIM to reside on the second base station

The second base station receives the path handover success indication, and determines the context information of the second SIM is obtained. Then, the second base station sends the residence indication to the first SIM, indicating that the second SIM is resided on the second base station.

After receiving the residence indication, the terminal may determine that the second base station has met the requirements for residing the second SIM, that is, the second base station has the context information of the second SIM, and the communication connection of the second SIM is switched from the base station where the second SIM currently resides to the second base station.

The terminal may enable the second SIM to reside on the second base station, so that the second SIM may initiate an RRC reconnection to the second base station or receive a paging from the second base station when the second SIM switches from the inactive state.

In an embodiment, the residence indication includes: an indication that the communication path of the second SIM is successfully switched from the base station where the second SIM currently resides to the second base station.

Here, the residence indication sent by the second base station may indicate that the communication path of the second SIM is successfully switched from the base station where the second SIM currently resides to the second base station. After obtaining the indication, the terminal may determine that the communication path of the second SIM has been switched to the second base station. Therefore, the terminal may enable the second SIM to reside on the second base station.

In an embodiment, sending a residence indication to the first SIM includes: sending a RRC signaling carrying the residence indication to the first SIM; sending a MAC CE signaling carrying the residence indication to the first SIM; sending a PDCCH signaling carrying the residence indication to the first SIM.

The residence indication may be carried in the RRC signaling, MAC CE signaling, or PDCCH signaling and sent to the first SIM.

The residence indication may be carried in reserved bits of existing the RRC signaling, MAC CE signaling, or PDCCH signaling. In this way, information amount of the signaling may be increased, and a utilization rate of the signaling may be improved. Alternatively, a specific RRC signaling, MAC CE signaling, or PDCCH signaling may also be added to carry the residence indication.

In an embodiment, receiving the information of the second SIM sent by the terminal includes: receiving a RRC reconfiguration complete signaling carrying the information of the second SIM sent by the first SIM to the second base station.

The first SIM may carry the information of the second SIM in the RRC reconfiguration complete (RRCReconfigurationComplete) signaling to notify the second base station to be resided by the second SIM, during the handover from the base station where the second SIM currently resides to the second base station.

The RRC reconfiguration complete signaling is configured to carry the information of the second SIM. On the one hand, by sending the RRC reconfiguration complete signaling, it may be determined that the first SIM has been switched to the second base station. For the situation where the first SIM is successfully switched, it may be ensured to switch at first time the resident base station of the second SIM. It may be ensured that the first SIM and the second SIM reside on the same base station. The communication quality of the second SIM is guaranteed. On the other hand, the information amount of the RRC reconfigured signaling may be increased, and the signaling utilization rate may be improved.

In an embodiment, the base station where the second SIM currently resides includes: the first base station.

The first SIM and the second SIM may reside on the first base station at the same time. In response to a handover of the first SIM from the first base station to the second base station, the terminal enables the second SIM to reside on the second base station.

Since the handover of the first SIM from the first base station to the second base station may perform signal measurement of the first base station, when the first SIM switches from the first base station to the second base station, it may be determined that the second base station has better communication environment such as signal quality. In this way, residing the second SIM on the second base station may enable the second SIM to obtain better signal quality and improve a success rate of the second SIM switching from the inactive state to the connected state.

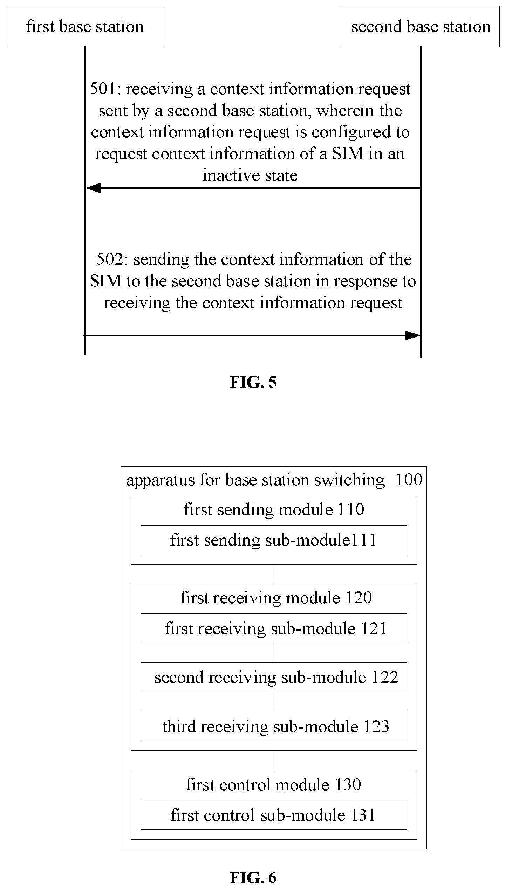

As shown in FIG. 5, a method for base station switching is provided in this embodiment, which may be applied to a first base station in a mobile communication network. The method includes the following steps at 501-502.

At 501: a context information request sent by a second base station is received, in which the context information request is configured to request context information of a SIM in an inactive state.

At 502, the context information of the SIM is sent to the second base station in response to receiving the context information request.

Here, the first base station may be a base station where the SIM of the terminal currently resides. The second base station may be a target base station where the SIM resides.

The context information has the logical connection relationship of the SIM. Therefore, the second base station needs to obtain the context information when the SIM resides on the second base station.

The second base station may request the first base station for the context information of the second SIM stored by the first base station. The second base station may request the first base station to send the context information of the second SIM stored by the first base station in the form of a context information request.

Exemplarily, the second base station may request the context information of the second SIM by sending a RETRIEVE UE CONTEXT REQUEST signaling.

After receiving the context information request sent by the second base station, the first base station may send the context information requested by the second base station to the second base station through an interface between base stations, such as an Xn interface in 5G mobile communication.

Exemplarily, the second base station may be replied by a RETRIEVE UE CONTEXT RESPONSE signaling, which carries the context information of the second SIM.

In this way, by obtaining the context information needed when the SIM in the inactive state may reside on the second base station, a method for the inactive SIM residing on the base station is provided, which improves the flexibility of the inactive SIM residing on the base station.

In an embodiment, receiving the context information request sent by the second base station includes: receiving, by an inter-base station interface between the first base station and the second base station, the context information request sent by the first base station. Sending the context information of the SIM to the second base station includes: sending, by the inter-base station interface, the context information of the SIM to the second base station.

The second base station may request the first base station for the context information of the second SIM stored by the first base station, through an interface between base stations, for example, an Xn interface in 5G mobile communication. The second base station may request the first base station to send the context information of the second SIM stored by the first base station in the form of a context information request.

Exemplarily, the second base station may request the context information of the second SIM by sending a RETRIEVE UE CONTEXT REQUEST signaling.

After receiving the context information request sent by the second base station, the first base station may send the context information requested by the second base station to the second base station through an interface between base stations, such as the Xn interface in 5G mobile communication.

Exemplarily, the second base station may be replied by a RETRIEVE UE CONTEXT RESPONSE signaling, which carries the context information of the second SIM.

A specific example is provided below in conjunction with any of the above-mentioned embodiments.

The target base station of the connected SIM handover may know information and state of a SIM in the inactive state of a multi-card terminal where the connected SIM is located through the handover process, so as to know the location of the inactive user in real time and improve the connection efficiency.

### 2.2 The whole content of the technical solution of the present invention

The multi-card terminal has a SIM card #1 in an inactive state and a SIM card #2 in a connected state.

The SIM card #2 performs measurements according to configuration of base station #1 during the movement. When a measurement report condition set by the base station #1 is met, the SIM card #2 performs measurement reporting to the base station #1. For example, the base station #2 that meets a handover condition is measured.

When the base station #1 decides to perform handover for the SIM card #2, a HANDOVER REQUEST signaling is sent to the base station #2 through the Xn interface.

If the base station #2 accepts the handover request of the base station #1, the base station #2 may send a HANDOVER REQUEST ACKNOWLEDGE signaling to the base station #1 through the Xn interface.

After receiving the HANDOVER REQUEST ACKNOWLEDGE signaling sent by the base station #2 through the Xn interface, the base station #1 sends an RRCReconfiguration signaling to the SIM card #2.

After receiving the RRCReconfiguration signaling sent by the base station #1, the SIM card #2 establishes an RRC connection with the base station #2 according to configuration in the signaling.

After the SIM card #2 successfully establishes the RRC connection with the base station #2, the SIM card #2 may send a RRCReconfigurationComplete signaling to the base station #2, and inform the base station #2 in the signaling that the multi-card terminal where the SIM card #2 is located has information and state of the SIM card #1. Alternatively, if the SIM card #2 knows the information and state of the SIM card #1, the SIM card #2 may directly inform the base station #2 of the information and state through the RRCReconfigurationComplete signaling.

The SIM card #2 may inform the SIM card #1 to switch to the base station #2 after, successfully establishing an RRC connection with the base station #2, and the SIM card #1 selects the base station #2 to which the SIM card #2 switches as an anchor base station for residing.

After obtaining the information and state of the SIM card #1, the base station #2 requests the base station #1 through the Xn interface for the context information of the SIM card #1 stored in the base station #1. The context information of the SIM card #1 stored in the base station #1 may be requested through a RETRIEVE UE CONTEXT REQUEST signaling.

After receiving the request from the base station #2 for obtaining the context information of the SIM card #1 stored in the base station #1, the base station #1 replies to the base station #2 for the requested information through the Xn interface. The replying may be performed by a RETRIEVE UE CONTEXT RESPONSE signaling.

After obtaining the context information of SIM card #1 stored in the base station #1, the base station #2 requests the core network to perform path handover for the SIM card #1.

After receiving a path handover request sent by the base station #2 for the SIM card #1, the core network sends a path handover request response signaling to the base station #2 to confirm that the path handover is successful.

After the base station #2 completes the path handover for the SIM card #1, the base station #2 sends a signaling to the SIM card #2 to inform that the path of the SIM card #1 has been switched to the base station #2. The signaling may be a RRC signaling, a MAC CE signaling, or a PDCCH signaling.

After receiving a signaling sent by the base station #2 that the path handover for the SIM card #1 is successful, the SIM card #2 informs the SIM card #1 that the path of the SIM card #1 has been switched to the base station #2. In this way, the SIM card #1 may select the base station #2 to reside on and use the base station #2 as the anchor base station.

When the network has downlink data sent to the SIM card #1, the AMF of the core network may directly send a paging signaling to the base station #2 instead of base station #1, and the base station #1 also does not need to send a radio access network (RAN) Paging to other base stations in the RAN of the SIM card #1 to find the SIM card #1.

When the SIM card #1 has uplink data to transmit, the SIM card #1 may directly initiate an RRC resume process to the base station #2 to resume the RRC connection.

an apparatus for base station switching is further provided in an embodiment of the present invention, which is applied to a terminal. FIG. 6 is a structural schematic diagram of an apparatus 100 for base station switching according to an embodiment of the invention. As shown in FIG. 6, the apparatus 100 includes: a first sending module 110.

The first sending module 110 is configured to in response to the terminal switching a first SIM from a first base station to a second base station, send information of a second SIM to the second base station, in which the information of the second SIM is configured to reside the second SIM in an inactive state on the second base station, and the first SIM is in a connected state.

In an embodiment, the apparatus 100 further includes: a first receiving module 120, configured to receive, by the first SIM, a residence indication sent by the second base station in response to the information of the second SIM, in which the residence indication is configured to instruct the second SIM to reside on the second base station.

In an embodiment, the apparatus 100 further includes: a first control module 130, configured to reside the second SIM on the second base station in response to receiving the residence indication.

In an embodiment, the first control module 130 includes: a first control sub-module 131, configured to reside the second SIM on the second base station in response to the first SIM forwarding the received residence indication to the second SIM.

In an embodiment, the first receiving module 120 includes at least one of: a first receiving sub-module 121, configured to receive a RRC signaling carrying the residence indication sent by the second base station; a second receiving sub-module 122, configured to receive a MAC CE signaling carrying the residence indication sent by the second base station; a third receiving sub-module 123, configured to receive a PDCCH signaling carrying the residence indication sent by the second base station.

In an embodiment, the residence indication includes: an indication that a communication path of the second SIM is successfully switched from a base station where the second SIM currently resides to the second base station.

In an embodiment, the base station where the second SIM currently resides includes: the first base station.

In an embodiment, the first sending module 110 includes: a first sending sub-module 111, configured to send, by the first SIM, a RRC reconfiguration complete signaling carrying the information of the second SIM to the second base station.

In an embodiment, the information of the second SIM includes: identification information and state information of the second SIM.

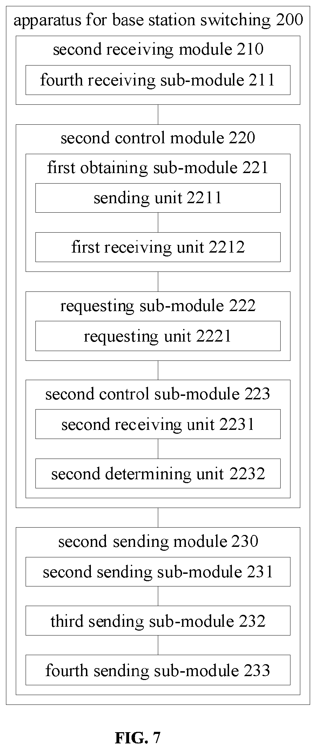

An apparatus for base station switching is further provided in an embodiment of the present invention, which is applied to a second base station. FIG. 7 is a structural schematic diagram of an apparatus 200 for base station switching according to an embodiment of the present invention. As shown in FIG. 7, the apparatus 200 includes: a second receiving module 210 and a second control module 220.

The second receiving module 210 is configured to receive information of a second SIM sent by a terminal, in which the second SIM is sent in response to switching the first SIM from a first base station to the second base station, and the information of the second SIM is configured to reside the second SIM in an inactive state on the second base station, and the first SIM is in a connected state.

The second control module 220 is configured to determine, based on the information of the second SIM, the second SIM in the inactive state is switched from a base station where the second SIM currently resides to the second base station.

In an embodiment, the second control module 220 includes at least one of: a first obtaining sub-module 221, configured to obtain, based on the information of the second SIM, context information of the second SIM from the base station where the second SIM currently resides; a requesting sub-module 222, configured to request a core network to switch a communication path of the second SIM to the second base station; and a second control sub-module 223, configured to in response to successfully obtaining the context information of the second SIM and determining that the core network switches the communication path of the second SIM to the second base station, switching a resident base station of the second SIM in the inactive state from the base station where the second SIM currently resides to the second base station.

In an embodiment, the first obtaining sub-module 221 includes: a sending unit 2211, configured to send, based on the information of the second SIM, a context information request to the base station where the second SIM currently resides, in which the context information request is configured to request the context information of the second SIM; and a first receiving unit 2212, configured to receive the context information of the second SIM sent by the base station where the second SIM currently resides in response to the context information request.

In an embodiment, the request sub-module 222 includes: a requesting unit 2221, configured to send, based on the received context information sent by the base station where the second SIM currently resides, a path handover request to the core network, wherein the path handover request is configured to request the core network to switch the communication path between the core network and the second SIM from the base station where the second SIM currently resides to the second base station. The second control sub-module 223 includes: a second receiving unit 2231, configured to receive a path handover success indication sent by the core network in response to the path handover request; and a second determining unit 2232, configured to determine, based on the path handover success indication, the communication path of the second SIM is successfully switched from the base station where the second SIM currently resides to the second base station.

In an embodiment, the apparatus 200 further includes: a second sending module 230, configured to receive by an inter-base station interface between the first base station and the second base station, the context information request sent by the first base station.

In an embodiment, the residence indication includes: an indication that the communication path of the second SIM is successfully switched from the base station where the second SIM currently resides to the second base station.

In an embodiment, the second sending module 230 includes: a second sending sub-module 231, configured to send a RRC signaling carrying the residence indication to the first SIM; a third sending sub-module 232, configured to send a MAC CE signaling carrying the residence indication to the first SIM; a fourth sending sub-module 233, configured to send a PDCCH signaling carrying the residence indication to the first SIM.

In an embodiment, the second receiving module 210 includes: a fourth receiving sub-module 211, configured to receive a RRC reconfiguration complete signaling carrying the information of the second SIM sent by the first SIM to the second base station.

In an embodiment, the information of the second SIM includes: identification information and state information of the second SIM.

In an embodiment, the base station where the second SIM currently resides includes: the first base station.

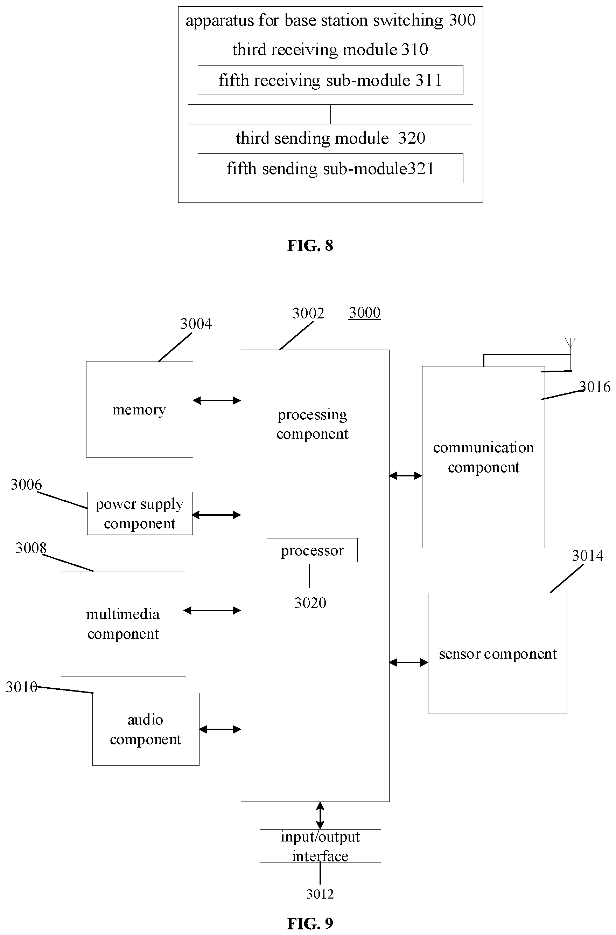

An apparatus for base station switching is further provided in an embodiment of the present invention, which is applied to a first base station. FIG. 8 is a structural schematic diagram of an apparatus 300 for base station switching according to an embodiment of the present invention. As shown in FIG. 8, the apparatus 300 includes: a third receiving module 310 and a third sending module 320.

The third receiving module 310 is configured to receive a context information request sent by a second base station, in which the context information request is configured to request context information of a SIM in an inactive state.

The third sending module 320 is configured to send the context information of the SIM to the second base station in response to receiving the context information request.

In an embodiment, the third receiving module 310 includes: a fifth receiving sub-module 311, configured to receive by an inter-base station interface between the first base station and the second base station, the context information request sent by the first base station. The third sending module 320 includes: a fifth sending sub-module 321, configured to send by the inter-base station interface, the context information of the SIM to the second base station.

In an embodiment, the first sending module 110, the first receiving module 120, the first control module 130, the second receiving module 210, the second control module 220, the second sending module 230, the third receiving module and 310 and the third sending module 320 and the like may be implemented by one or more central processing units (CPUs), graphics processing units (GPUs), baseband processors (BPs), application specific integrated circuits (ASICs), DSPs, programmable logic devices (PLDs), complex programmable logic device (CPLDs), field programmable gate arrays (FPGAs), general-purpose processors, controllers, micro controller units (MCUs), microprocessors, or other electronic components, may also be implemented in combination with one or more radio frequency (RF) antennas for performing the above method.

FIG. 9 illustrates a block diagram of a device 3000 for base station switching according to an embodiment. For example, the device 3000 may be a mobile phone, a computer, a digital broadcast terminal, a messaging device, a game console, a tablet device, a medical device, a fitness device, a personal digital assistant, and the like.

Referring to FIG. 9, the device 3000 may include one or more of the following components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the overall operation of the device 3000, such as operations associated with display, phone calls, data communication, camera operations, and recording operations. The processing component 3002 may include one or more processors 3020 to execute instructions, to perform all or some of the steps in the methods described above. Additionally, the processing component 3002 may include one or more modules that facilitate interactions between the processing component 3002 and other components. For example, the processing component 3002 may include a multimedia module to facilitate interactions between the multimedia component 3008 and the processing component 3002.

The memory 3004 is configured to store various types of data to support operations at the device 3000. Examples of such data include instructions for any application or method operating on the device 3000, contact data, phonebook data, messages, pictures, videos, and the like. The memory 3004 may be implemented by any category of volatile or non-volatile storage devices, or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power supply component 3006 provides power to various components in the device 3000. The power supply components 3006 may include a power management system, one or more power supplies, and other components associated with generating, managing, and distributing power to the device 3000.

The multimedia component 3008 includes a screen that provides an output interface between the device 3000 and the user. In some embodiments, the screen may include a liquid crystal display (LCD) and a touch panel (TP). When the screen includes the TP, the screen may be implemented as a touch screen to receive input signals from the user. The TP includes one or more touch sensors to sense touches, swipes, and gestures on the TP. The touch sensor may sense not only the boundaries of a touch or swipe action, but also the duration and pressure associated with the touch or swipe action. In some embodiments, the multimedia component 3008 includes a front-facing camera and/or a rear-facing camera. When the device 3000 is in an operation mode, such as a shooting mode or a video mode, the front camera and/or the rear camera may receive external multimedia data. Each of the front and rear cameras may be a fixed optical lens system or have focal length and optical zoom capability.

The audio component 3010 is configured to output and/or input audio signals. For example, audio component 3010 includes a microphone (MIC) that is configured to receive external audio signals when the device 3000 is in an operating mode, such as a call mode, a recording mode, and a voice recognition mode. The received audio signals may be also stored in the memory 3004 or transmitted via the communication component 3016. In some embodiments, the audio component 3010 also includes a speaker for outputting audio signals.

The I/O interface 3012 provides an interface between the processing component 3002 and a peripheral interface module, which may be a keyboard, a click wheel, a button, and the like. These buttons may include, but are not limited to: a home button, a volume button, a start button, and a lock button.

The sensor component 3014 includes one or more sensors for providing state assessment to various aspects of the device 3000. For example, the sensor component 3014 may detect the open/closed state of the device 3000, the relative positioning of the components, such as the display and keypad of the device 3000, the sensor component 3014 may also detect a position change of the device 3000 or a position change of a component of the device 3000, a presence or absence of contacts between the user and the device 3000, an orientation or acceleration/deceleration of the device 3000 and a temperature change of the device 3000. The sensor component 3014 may include a proximity sensor configured to detect the presence of nearby objects in the absence of any physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the device 3000 and other devices. The device 3000 may access a wireless network based on a communication standard, such as Wi-Fi, 2G or 3G, or their combination. In an embodiment, the communication component 3016 receives broadcast signals or broadcast related information from an external broadcast management system via a broadcast channel. In an embodiment, the communication component 3016 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an embodiment, the device 3000 may be implemented by one or more application specific integrated circuits (ASICs), digital signal processors (DSPs), digital signal processing devices (DSPDs), programmable logic devices (PLDs), field programmable gate arrays (FPGA), controllers, MCUs, microprocessors or other electronic components, to perform the above method.

In an embodiment, there is also provided a non-transitory computer-readable storage medium including instructions, such as the memory 3004 including instructions, which are executable by the processor 3020 in the device 3000 to perform the above method. For example, the non-transitory computer-readable storage medium may be a ROM, a random access memory (RAM), a CD-ROM, a magnetic tape, a floppy disk, an optical data storage device, and the like.

Those skilled in the art may be readily aware of other implementations of the embodiments of the invention, upon consideration of the specification and practice of the invention disclosed herein.

It should be understood that, the embodiments of the invention are not limited to the precise structures described above and illustrated in the accompanying drawings, and various modifications and changes may be made without departing from the scope of the invention. The scope of embodiments of the invention is limited by the appended claims.

## Claims

1. A method for base station switching, performed by a terminal (11), the method comprising:
in response to the terminal switching a first subscriber identity module, SIM, from a first base station (12) to a second base station (12), sending (201) information of a second SIM of the terminal to the second base station, wherein the information of the second SIM is configured to reside the second SIM in an inactive state on the second base station, and the first SIM is in a connected state;
**characterized in that**, the method further comprises: receiving (202), by the first SIM, a residence indication sent by the second base station in response to the information of the second SIM, wherein the residence indication is configured to instruct the second SIM to reside on the second base station.

2. The method of claim 1, further comprising:
residing the second SIM on the second base station in response to receiving the residence indication.

3. The method of claim 2, wherein residing the second SIM on the second base station in response to receiving the residence indication comprises:
residing the second SIM on the second base station in response to the first SIM forwarding the received residence indication to the second SIM.

4. The method of claim 1, wherein receiving the residence indication sent by the second base station in response to the information of the second SIM comprises at least one of:
receiving a radio resource control, RRC, signaling carrying the residence indication sent by the second base station;
receiving a medium access control, MAC, control element, CE, signaling carrying the residence indication sent by the second base station;
receiving a physical downlink control channel, PDCCH, signaling carrying the residence indication sent by the second base station.

5. The method of claim 1, wherein the residence indication comprises an indication that a communication path of the second SIM is successfully switched from a base station where the second SIM currently resides to the second base station;
preferably the base station where the second SIM currently resides comprises: the first base station.

6. The method of any one of claims 1 to 5, wherein:
sending the information of the second SIM to the second base station comprises:
sending, by the first SIM, an RRC reconfiguration complete signaling carrying the information of the second SIM to the second base station; or
wherein the information of the second SIM comprises: identification information and state information of the second SIM.

7. A method for base station switching, performed by a second base station (12), the method comprising:
receiving (401) information of a second subscriber identity module, SIM, sent by a terminal (11), wherein the information of the second SIM is sent in response to a first SIM of the terminal switching from a first base station (12) to the second base station, and the information of the second SIM is configured to reside the second SIM in an inactive state on the second base station, and the first SIM is in a connected state;
**characterized in that**, the method further comprises:
determining (402), based on the information of the second SIM, to switch the second SIM in the inactive state from a base station where the second SIM currently resides to the second base station; and
sending a residence indication to the first SIM, wherein the residence indication is configured to instruct the second SIM to reside on the second base station.

8. The method of claim 7, wherein determining, based on the information of the second SIM, to switch the second SIM in the inactive state from a base station where the second SIM currently resides to the second base station comprises at least one of:
obtaining (501), based on the information of the second SIM, context information of the second SIM from the base station where the second SIM currently resides;
requesting a core network (13) to switch a communication path of the second SIM to the second base station; and
in response to successfully obtaining the context information of the second SIM and determining that the core network switches the communication path of the second SIM to the second base station, switching a resident base station of the second SIM in the inactive state from the base station where the second SIM currently resides to the second base station.

9. The method of claim 8, wherein obtaining, based on the information of the second SIM, the context information of the second SIM from the base station where the second SIM currently resides comprises:
sending (502), based on the information of the second SIM, a context information request to the base station where the second SIM currently resides, wherein the context information request is configured to request the context information of the second SIM; and
receiving the context information of the second SIM sent by the base station where the second SIM currently resides in response to the context information request.

10. The method of claim 8, wherein requesting the core network to switch the communication path of the second SIM to the second base station comprises:
sending, based on the received context information sent by the base station where the second SIM currently resides, a path handover request to the core network, wherein the path handover request is configured to request the core network to switch the communication path between the core network and the second SIM from the base station where the second SIM currently resides to the second base station;
determining that the core network switches the communication path of the second SIM to the second base station comprises:
receiving a path handover success indication sent by the core network in response to the path handover request; and
determining, based on the path handover success indication, the communication path of the second SIM is successfully switched from the base station where the second SIM currently resides to the second base station.

11. The method of claim 7, wherein:
the residence indication comprises: an indication that the communication path of the second SIM is successfully switched from the base station where the second SIM currently resides to the second base station;
preferably sending the residence indication to the first SIM comprises at least one of:
sending a radio resource control, RRC signaling carrying the residence indication to the first SIM;
sending a medium access control, MAC control element, CE, signaling carrying the residence indication to the first SIM;
sending a physical downlink control channel, PDCCH, signaling carrying the residence indication to the first SIM.

12. The method of any one of claims 7 to 11, wherein receiving the information of the second SIM sent by the terminal comprises:
receiving an RRC reconfiguration complete signaling carrying the information of the second SIM that is sent by the first SIM to the second base station;
preferably the information of the second SIM comprises: identification information and state information of the second SIM;
preferably the base station where the second SIM currently resides comprises: the first base station.

13. A communication device, comprising a processor, a transceiver, a memory, and an executable program stored on the memory and capable of being run by the processor, wherein when the executable program is run by the processor, steps in the method for base station switching are implemented according to any one of claims 1 to 6, or claims 7 to 12.

## Patentansprüche

1. Verfahren zum Umschalten einer Basisstation, das von einem Endgerät (11) durchgeführt wird, wobei das Verfahren umfasst:
als Reaktion darauf, dass das Endgerät ein erstes Teilnehmeridentitätsmodul, SIM, von einer ersten Basisstation (12) zu einer zweiten Basisstation (12) umschaltet, Senden (201) von Informationen eines zweiten SIM des Endgeräts an die zweite Basisstation, wobei die Informationen des zweiten SIM so konfiguriert sind, dass das zweite SIM in einem inaktiven Zustand an der zweiten Basisstation residiert und das erste SIM in einem verbundenen Zustand ist;
**dadurch gekennzeichnet, dass** das Verfahren ferner umfasst: Empfangen (202), mittels des ersten SIM, einer Residenzanzeige, die von der zweiten Basisstation als Reaktion auf die Informationen des zweiten SIM gesendet wird, wobei die Residenzanzeige so ausgebildet ist, dass sie das zweite SIM anweist, an der zweiten Basisstation zu residieren.

2. Verfahren nach Anspruch 1, das ferner umfasst:
Residieren des zweiten SIM an der zweiten Basisstation als Reaktion auf das Empfangen der Residenzanzeige.

3. Verfahren nach Anspruch 2, wobei das Residieren des zweiten SIM an der zweiten Basisstation als Reaktion auf das Empfangen der Residenzanzeige umfasst:
Residieren des zweiten SIM an der zweiten Basisstation als Reaktion darauf, dass das erste SIM die empfangene Residenzanzeige an das zweite SIM weiterleitet.

4. Verfahren nach Anspruch 1, wobei das Empfangen der Residenzanzeige, die von der zweiten Basisstation als Reaktion auf die Informationen des zweiten SIM gesendet wird, mindestens eines aus Folgendem umfasst:
Empfang einer Radio-Resource-Control-, RRC, Signalisierung, welche die von der zweiten Basisstation gesendete Residenzanzeige trägt;
Empfang einer Signalisierung eines Medium-Access-Control-, MAC, Steuerelements, CE, welche die von der zweiten Basisstation gesendete Residenzanzeige trägt;
Empfangen einer Signalisierung eines Physical Downlink Control Channel, PDCCH, welche die von der zweiten Basisstation gesendete Residenzanzeige trägt.

5. Verfahren nach Anspruch 1, wobei die Residenzanzeige eine Anzeige aufweist, dass ein Kommunikationspfad des zweiten SIM erfolgreich von einer Basisstation, in der das zweite SIM derzeit residiert, zu der zweiten Basisstation geschaltet wird; vorzugsweise weist die Basisstation, in der das zweite SIM residiert, Folgendes auf: die erste Basisstation.

6. Verfahren nach einem der Ansprüche 1 bis 5, wobei:
das Senden der Informationen des zweiten SIM an die zweite Basisstation umfasst: Senden, mittels des ersten SIM, einer RRC-Rekonfigurationsabschlusssignalisierung, welche die Informationen des zweiten SIM an die zweite Basisstation trägt; oder
wobei die Informationen des zweiten SIM umfassen: Identifikationsinformationen und Zustandsinformation des zweiten SIM.

7. Verfahren zum Umschalten einer Basisstation, das von einer zweiten Basisstation (12) durchgeführt wird, wobei das Verfahren umfasst:
Empfangen (401) von Informationen eines zweiten Teilnehmeridentitätsmoduls, SIM, das von einem Endgerät (11) gesendet wird, wobei die Informationen des zweiten SIM als Reaktion darauf gesendet werden, dass ein erstes SIM des Endgeräts von einer ersten Basisstation (12) zu der zweiten Basisstation umschaltet, und wobei die Informationen des zweiten SIM so konfiguriert sind, dass das zweite SIM in einem inaktiven Zustand an der zweiten Basisstation residiert und das erste SIM in einem verbundenen Zustand ist;
**dadurch gekennzeichnet, dass** das Verfahren ferner umfasst:
Bestimmen (402), basierend auf den Informationen des zweiten SIM, dass das zweite SIM im inaktiven Zustand von einer Basisstation, in der das zweite SIM derzeit residiert, zu der zweiten Basisstation umgeschaltet werden soll; und
Senden einer Residenzanzeige an das erste SIM, wobei die Residenzanzeige so ausgebildet ist, dass sie das zweite SIM anweist, an der zweiten Basisstation zu residieren.

8. Verfahren nach Anspruch 7, wobei das Bestimmen, basierend auf den Informationen des zweiten SIM, dass das zweite SIM im inaktiven Zustand von einer Basisstation, in der das zweite SIM derzeit residiert, zu der zweiten Basisstation umgeschaltet werden soll, mindestens eines aus Folgendem umfasst:
Erhalten (501), basierend auf den Informationen des zweiten SIM, von Kontextinformationen des zweiten SIM von der Basisstation, in der das zweite SIM derzeit residiert;
Auffordern eines Kernnetzes (13), einen Kommunikationspfad des zweiten SIM zur zweiten Basisstation umzuschalten; und
als Reaktion auf das erfolgreiche Erhalten der Kontextinformationen des zweiten SIM und das Bestimmen, dass das Kernnetz den Kommunikationspfad des zweiten SIM zur zweiten Basisstation umschaltet, Umschalten einer residenten Basisstation des zweiten SIM im inaktiven Zustand von der Basisstation, in der das zweite SIM derzeit residiert, zur zweiten Basisstation.

9. Verfahren nach Anspruch 8, wobei das Erhalten, basierend auf den Informationen des zweiten SIM, der Kontextinformationen des zweiten SIM von der Basisstation, in der das zweite SIM derzeit residiert, umfasst:
Senden (502), basierend auf den Informationen des zweiten SIM, einer Kontextinformationsanforderung an die Basisstation, in der das zweite SIM derzeit residiert, wobei die Kontextinformationsanforderung dazu ausgebildet ist, die Kontextinformationen des zweiten SIM anzufordern; und
Empfangen der Kontextinformationen des zweiten SIM, die von der Basisstation, in der das zweite SIM derzeit residiert, als Reaktion auf die Kontextinformationsanforderung gesendet werden.

10. Verfahren nach Anspruch 8, wobei das Auffordern des Kernnetzes, den Kommunikationspfad des zweiten SIM zur zweiten Basisstation umzuschalten, umfasst:
Senden, basierend auf den empfangenen Kontextinformationen, die von der Basisstation, in der das zweite SIM derzeit residiert, gesendet werden, einer Pfadübergabeanforderung, wobei die Pfadübergabeanforderung so ausgebildet ist, dass sie das Kernnetz auffordert, den Kommunikationspfad zwischen dem Kernnetz und dem zweiten SIM von der Basisstation, in der das zweite SIM derzeit residiert, zu der zweiten Basisstation umzuschalten;
wobei das Bestimmen, dass das Kernnetz den Kommunikationspfad des zweiten SIM zur zweiten Basisstation umschaltet, umfasst:
Empfangen einer Pfadübergabe-Erfolgsanzeige, die vom Kernnetz als Reaktion auf die Pfadübergabeanforderung gesendet wird; und
Bestimmen, basierend auf der Pfadübergabe-Erfolgsanzeige, dass der Kommunikationspfad des zweiten SIM erfolgreich von der Basisstation, in der das zweite SIM derzeit residiert, zu der zweiten Basisstation geschaltet wird.

11. Verfahren nach Anspruch 7, wobei
die Residenzanzeige aufweist: eine Anzeige, dass der Kommunikationspfad des zweiten SIM erfolgreich von der Basisstation, in der das zweite SIM derzeit residiert, zu der zweiten Basisstation geschaltet wird;
das Senden der Residenzanzeige an das erste SIM mindestens eines aus Folgendem umfasst:
Senden einer Radio-Resource-Control-, RRC, Signalisierung, welche die Residenzanzeige an das erste SIM trägt;
Senden einer Signalisierung eines Medium-Access-Control-, MAC, Steuerelements, CE, welche die Residenzanzeige trägt, an das erste SIM;
Senden einer Signalisierung eines Physical Downlink Control Channel, PDCCH, welche die Residenzanzeige trägt, an das erste SIM.

12. Verfahren nach einem der Ansprüche 7 bis 11, wobei das Empfangen der von dem Endgerät gesendeten Informationen des zweiten SIM umfasst:
Empfangen einer RRC-Rekonfigurationsabschlusssignalisierung, welche die Informationen des zweiten SIM trägt, die von dem ersten SIM an die zweite Basisstation gesendet werden;
wobei die Informationen des zweiten SIM vorzugsweise umfassen: Identifikationsinformationen und Zustandsinformation des zweiten SIM;
vorzugsweise weist die Basisstation, in der das zweite SIM residiert, Folgendes auf: die erste Basisstation.

13. Kommunikationsvorrichtung, die einen Prozessor, einen Transceiver, einen Speicher und ein ausführbares Programm aufweist, das in dem Speicher gespeichert ist und von dem Prozessor ausgeführt werden kann, wobei, wenn das ausführbare Programm von dem Prozessor ausgeführt wird, Schritte in dem Verfahren zum Umschalten einer Basisstation nach einem der Ansprüche 1 bis 6 oder 7 bis 12 implementiert werden.

## Revendications

1. Procédé de commutation de station de base, mis en œuvre par un terminal (11), le procédé comprenant l'étape consistant à :
en réponse au fait que le terminal commute un premier module d'identité d'abonné, dit SIM, d'une première station de base (12) à une seconde station de base (12), envoyer (201) des informations d'un second SIM du terminal à la seconde station de base, dans lequel les informations du second SIM sont configurées pour amener le second SIM dans un état inactif à résider sur la seconde station de base, et le premier SIM est dans un état connecté ;
**caractérisé en ce que** le procédé comprend en outre l'étape consistant à : recevoir (202), par le premier SIM, une indication de résidence envoyée par la seconde station de base en réponse aux informations du second SIM, dans lequel l'indication de résidence est configurée pour ordonner au second SIM de résider sur la seconde station de base.

2. Procédé selon la revendication 1, comprenant en outre l'étape consistant à :
amener le second SIM à résider sur la seconde station de base en réponse à la réception de l'indication de résidence.

3. Procédé selon la revendication 2, dans lequel l'étape consistant à amener le second SIM à résider sur la seconde station de base en réponse à la réception de l'indication de résidence consiste à :
amener le second SIM à résider sur la seconde station de base en réponse au fait que le premier SIM transfère l'indication de résidence reçue au second SIM.

4. Procédé selon la revendication 1, dans lequel l'étape de réception de l'indication de résidence envoyée par la seconde station de base en réponse aux informations du second SIM consiste à :
recevoir une signalisation de commande de ressources radio, dite RRC, véhiculant l'indication de résidence envoyée par la seconde station de base ; et/ou
recevoir une signalisation d'élément de commande, dit CE, de commande d'accès au support, dite MAC, véhiculant l'indication de résidence envoyée par la seconde station de base ; et/ou
recevoir une signalisation de canal physique de commande de liaison descendante, dit PDCCH, véhiculant l'indication de résidence envoyée par la seconde station de base.

5. Procédé selon la revendication 1, dans lequel l'indication de résidence comprend une indication du fait qu'un trajet de communication du second SIM a été commuté réussie d'une station de base dans laquelle réside couramment le second SIM à la seconde station de base ;
de préférence, la station de base dans laquelle réside couramment le second SIM comprend : la première station de base.

6. Procédé selon l'une quelconque des revendications 1 à 5, dans lequel :
l'étape d'envoi des informations du second SIM à la seconde station de base consiste à :
envoyer, par le premier SIM, une signalisation complète de reconfiguration de RRC véhiculant les informations du second SIM à la seconde station de base ; ou
dans lequel les informations du second SIM comprennent : des informations d'identification et des informations d'état du second SIM.

7. Procédé de commutation de station de base, mis en œuvre par une seconde station de base (12), le procédé comprenant l'étape consistant à :
recevoir (401) des informations d'un second module d'identité d'abonné, dit SIM, envoyées par un terminal (11), dans lequel les informations du second SIM sont envoyées en réponse au fait qu'un premier SIM du terminal commute d'une première station de base (12) à la seconde station de base, et les informations du second SIM sont configurées pour amener le second SIM dans un état inactif à résider sur la seconde station de base, et le premier SIM est dans un état connecté ;
**caractérisé en ce que** le procédé comprend en outre les étapes consistant à :
déterminer (402), sur la base des informations du second SIM, qu'il convient de commuter le second SIM dans l'état inactif d'une station de base dans laquelle réside couramment le second SIM à la seconde station de base ; et
envoyer une indication de résidence au premier SIM, dans lequel l'indication de résidence est configurée pour ordonner au second SIM de résider sur la seconde station de base.

8. Procédé selon la revendication 7, dans lequel l'étape de détermination, sur la base des informations du second SIM, du fait qu'il convient de commuter le second SIM dans l'état inactif d'une station de base dans laquelle réside couramment le second SIM à la seconde station de base comprend les étapes consistant à :
obtenir (501), sur la base des informations du second SIM, des informations de contexte du second SIM de la station de base dans laquelle réside couramment le second SIM ;
demander à un réseau central (13) de commuter un trajet de communication du second SIM vers la seconde station de base ; et
en réponse à l'obtention réussie des informations de contexte du second SIM et à la détermination du fait que le réseau central commute le trajet de communication du second SIM vers la seconde station de base, commuter une station de base de résidence du second SIM dans l'état inactif de la station de base dans laquelle réside couramment le second SIM à la seconde station de base.

9. Procédé selon la revendication 8, dans lequel l'étape d'obtention, sur la base des informations du second SIM, des informations de contexte du second SIM de la station de base dans laquelle réside couramment le second SIM comprend les étapes consistant à :
envoyer (502), sur la base des informations du second SIM, une demande d'informations de contexte à la station de base dans laquelle réside couramment le second SIM, dans lequel la demande d'informations de contexte est configurée pour demander les informations de contexte du second SIM ; et
recevoir les informations de contexte du second SIM envoyées par la station de base dans laquelle réside couramment le second SIM en réponse à la demande d'informations de contexte.

10. Procédé selon la revendication 8, dans lequel l'étape de demande au réseau central de commuter le trajet de commutation du second SIM vers la seconde station de base consiste à :
envoyer, sur la base des informations de contexte reçues envoyées par la station de base dans laquelle réside couramment le second SIM, une demande de transfert intercellulaire de trajet au réseau central, dans lequel la demande de transfert intercellulaire de trajet est configurée pour demander au réseau central de commuter le trajet de communication entre le réseau central et le second SIM de la station de base dans laquelle réside couramment le second SIM vers la seconde station de base ;
l'étape de détermination du fait que le réseau central commute le trajet de communication du second SIM vers la seconde station de base consiste à :
recevoir une indication de réussite de transfert intercellulaire de trajet envoyée par le réseau central en réponse à la demande de transfert intercellulaire de trajet ; et
déterminer, sur la base de l'indication de réussite de transfert intercellulaire de trajet, que le trajet de communication du second SIM a été commuté avec réussite de la station de base dans laquelle réside couramment le second SIM vers la seconde station de base.

11. Procédé selon la revendication 7, dans lequel :
l'indication de résidence comprend : une indication du fait que le trajet de communication du second SIM a été commuté avec réussite de la station de base dans laquelle réside couramment le second SIM vers la seconde station de base ;
de préférence, l'étape d'envoi de l'indication de résidence du premier SIM consiste à :
envoyer une signalisation de commande de ressources radio, dite RRC, véhiculant l'indication de résidence au premier SIM ; et/ou
envoyer une signalisation d'élément de commande, dit CE, de commande d'accès au support, dite MAC, véhiculant l'indication de résidence au premier SIM ; et/ou
envoyer une signalisation de canal physique de commande de liaison descendante, dit PDCCH, véhiculant l'indication de résidence au premier SIM.

12. Procédé selon l'une quelconque des revendications 7 à 11, dans lequel l'étape de réception des informations du second SIM envoyées par le terminal consiste à :
recevoir une signalisation complète de reconfiguration de RRC véhiculant les informations du second SIM qui ont été envoyées par le premier SIM à la seconde station de base ;
de préférence, les informations du second SIM comprennent : des informations d'identification et des informations d'état du second SIM ;
de préférence, la station de base dans laquelle réside couramment le second SIM comprend : la première station de base.

13. Dispositif de communication, comprenant un processeur, un émetteur-récepteur, une mémoire et un programme exécutable maintenu dans la mémoire et pouvant être exécuté par le processeur, dans lequel, lorsque le programme exécutable est exécuté par le processeur, les étapes du procédé de commutation de station de base selon l'une quelconque des revendications 1 à 6, ou des revendications 7 à 12 sont mises en œuvre.
